(19) Europäisches Patentamt
European Patent Office
Office européen des brevets

(11) **EP 4 492 104 A1**

(12) **EUROPÄISCHE PATENTANMELDUNG**

(43) Veröffentlichungstag:
**15.01.2025 Patentblatt 2025/03**

(21) Anmeldenummer: **24186091.5**

(22) Anmeldetag: **02.07.2024**

(51) Internationale Patentklassifikation (IPC):
**G02B 6/32** (2006.01) **G02B 6/38** (2006.01)

(52) Gemeinsame Patentklassifikation (CPC):
**G02B 6/32; G02B 6/3825; G02B 6/3839; G02B 6/3853; G02B 6/3885;** G02B 6/032; G02B 6/327; G02B 6/3834; G02B 6/3861

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **13.07.2023 DE 102023118609**

(71) Anmelder: **HUBER+SUHNER Cube Optics AG 55129 Mainz (DE)**

(72) Erfinder:
• **Sörensen, Katrin 55129 Mainz (DE)**
• **Drews, Dietrich 55278 Selzen (DE)**
• **Smaglinski, Ingo 55131 Mainz (DE)**
• **Petigk, Thomas 65428 RÜSSELSHEIM (DE)**

(74) Vertreter: **WSL Patentanwälte Partnerschaft mbB Kaiser-Friedrich-Ring 98 65185 Wiesbaden (DE)**

(54) **MULTILICHTWELLENLEITERSTECKER SOWIE LICHTWELLENLEITERVERBINDER MIT EINEM SOLCHEN**

(57) Die vorliegende Erfindung betrifft einen Lichtwellenleiterstecker für einen Lichtwellenleiterverbinder zum optischen Verbinden einer Anzahl N von ersten Lichtwellenleitern, wobei N ≥ 2 ist, mit einer Anzahl M von zweiten Lichtwellenleitern, wobei M ≥ 1 ist, wobei der Lichtwellenleiterstecker einen Endabschnitt jedes ersten Lichtwellenleiters mit einer Lichtwellenleiterstirnfläche hält und eine Anzahl N von Linsen aufweist, die jeweils eine Eintrittsfläche, die einem der ersten Lichtwellenleiter zugewandt ist, und eine Austrittsfläche, die diesem ersten Lichtwellenleiter abgewandt ist, aufweist, wobei jede Linse genau einem ersten Lichtwellenleiter und jeder Lichtwellenleiter genau einer Linse zugeordnet ist und die Linsen derart ausgebildet und angeordnet sind, dass ein aus einem der ersten Lichtwellenleiter in einer Ausbreitungsrichtung austretendes Strahlenbündel auf die Eintrittsfläche der zugeordneten Linse trifft und als konvergentes Strahlenbündel auf die Austrittsfläche der zugeordneten Linse projiziert wird.

Fig. 15

EP 4 492 104 A1

**Beschreibung**

Die vorliegende Erfindung betrifft einen Lichtwellenleiterverbinder sowie einen Lichtwellenleiterstecker für einen Lichtwellenleiterverbinder zum optischen Verbinden von Lichtwellenleitern.

Lichtwellenleiter sind Leitungen zur Übertragung von Lichtsignalen. Lichtwellenleiter weisen häufig Fasern aus Quarzglas auf. Sie werden umgangssprachlich auch als Glasfaserkabel bezeichnet, selbst wenn keine Fasern aus Glas enthalten sind.

Solche Lichtwellenleiter werden insbesondere in der Nachrichtentechnik zur Übertragung von Informationssignalen eingesetzt. Solche Lichtwellenleiter sind jedoch nicht unendlich lang, sodass es notwendig ist, mehrere Lichtwellenleiter miteinander zu verbinden. Zur Verbindung kommen häufig Steckverbindungen oder Spleißverbindungen zum Einsatz. Beim Spleißen werden die Faserenden zweier zu verbindender Lichtwellenleiter aufgeschmolzen und aneinandergeschoben. Die Steckverbinder dienen in der Regel zur lösbaren Verbindung von Lichtwellenleitern. Meist kommen hier Stecker-Stecker-Verbindungen zum Einsatz, die derart konstruiert sind, dass eine möglichst geringe Signaldämpfung erfolgt. Allerdings werden im Stand der Technik immer Lichtwellenleiter mit gleichen für die Signalübertragung nutzbaren Durchmessern (Felddurchmesser) miteinander verbunden.

Üblicherweise wird zwischen Monomode-Lichtwellenleitern und Multimode-Lichtwellenleitern unterschieden. Diese unterscheiden sich jedoch in ihren Felddurchmessern.

Es sind allerdings seit einiger Zeit auch Hohlfasern bekannt, welche im Querschnitt einen oder mehrere Hohlräume aufweisen. Auch diese können zur Leitung von Licht verwendet werden. Solche Hohlfasern, die auch Hohlkernfasern genannt werden, haben prinzipiell Vorteile gegenüber Vollkernfasern. Allerdings lassen sich die Hohlkernfasern erst in letzter Zeit zu akzeptablen Kosten in großen Längen und ausreichender Qualität herstellen. Daher wurden und werden nach wie vor Vollkernlichtwellenleiter eingesetzt.

Es gibt bereits optische Signalübertragungssysteme, die Hohlfasern einsetzen. Allerdings ist es nicht einfach, mehrere Hohlfasern miteinander zu verbinden. Darüber hinaus ist es nicht bekannt, eine Hohlkernfaser mit einer Vollkernfaser ohne unerwünschte Rückreflexionen kostengünstig steckbar zu koppeln, sodass die Lichtwellenleiter nicht in Kombination eingesetzt werden können. Dies liegt unter anderem daran, dass der für die Lichtübertragung nutzbare Durchmesser (Felddurchmesser) bei den Hohlkernfasern etwa doppelt so groß ist wie der Felddurchmesser bei den Vollkernfasern. Dies hat die Verbreitung von Hohlkernfasern gebremst. Darüber hinaus ist es unter Umständen mühsam, jeden einzelnen Lichtwellenleiter mit einer Steckverbindung mit einem anderen Lichtwellenleiter zu verbinden.

Ausgehend von dem beschriebenen Stand der Technik ist es daher Aufgabe der vorliegenden Erfindung, eine Verbindungstechnik anzugeben, mit der gleichzeitig eine Mehrzahl von Lichtwellenleitern miteinander verbunden werden können, wobei sowohl Hohlkernlichtwellenleiter miteinander als auch Lichtwellenleiter mit unterschiedlichen Felddurchmessern, wie z.B. ein Vollkernlichtwellenleiter mit einem Hohlkernlichtwellenleiter, verbunden werden können.

Hinsichtlich des Lichtwellenleitersteckers wird diese Aufgabe durch einen Lichtwellenleiterstecker für einen Lichtwellenleiterverbinder zum optischen Verbinden einer Anzahl N von ersten Lichtwellenleitern, wobei N ≥ 2 ist, mit einer Anzahl M von zweiten Lichtwellenleitern, wobei M ≥ 1 ist, gelöst, wobei der Lichtwellenleiterstecker einen Endabschnitt jedes ersten Lichtwellenleiters mit einer Lichtwellenleiterstirnfläche hält und eine Anzahl N von Linsen aufweist, die jeweils eine Eintrittsfläche, die einem der ersten Lichtwellenleiter zugewandt ist, und eine Austrittsfläche, die diesem ersten Lichtwellenleiter abgewandt ist, aufweist, wobei jede Linse genau einem ersten Lichtwellenleiter und jeder Lichtwellenleiter genau einer Linse zugeordnet ist und die Linsen derart ausgebildet und angeordnet sind, dass ein aus einem der ersten Lichtwellenleiter in einer Ausbreitungsrichtung austretendes Strahlenbündel auf die Eintrittsfläche der zugeordneten Linse trifft und als konvergentes Strahlenbündel auf die Austrittsfläche der zugeordneten Linse projiziert wird.

In der Regel wird N = M sein, da nur dann in beiden Richtungen die Signale aller Lichtwellenleiter übertragen werden können. Prinzipiell könnte aber auch M größer oder kleiner als N sein, so dass nicht alle Lichtwellenleiter verbunden sind oder mehrere erste Lichtwellenleiter mit einem zweiten Lichtwellenleiter verbunden sind.

Betrachtet man einen ersten Lichtwellenleiter, so hält der Lichtwellenleiterstecker einen Endabschnitt dieses ersten Lichtwellenleiters mit einer ersten Lichtwellenleiterstirnfläche und eine zugeordnete Linse mit einer Eintrittsfläche, die dem Lichtwellenleiter zugewandt ist, und einer Austrittsfläche, die diesem ersten Lichtwellenleiter abgewandt ist. Dabei ist die Linse derart ausgebildet und angeordnet, dass ein aus diesem ersten Lichtwellenleiter austretendes Strahlenbündel auf die Eintrittsfläche der Linse tritt und als konvergentes Strahlenbündel auf die Austrittsfläche der Linse projiziert wird.

Eine von dem Strahlenbündel getragene Information wird somit aus dem ersten Lichtwellenleiter auf die Austrittsfläche projiziert und kann dort weiterverarbeitet oder weitergeleitet werden. In einer bevorzugten Ausführungsform ist der erste Lichtwellenleiter ein Hohlkernlichtwellenleiter.

Dabei ist es besonders bevorzugt, wenn das Strahlenbündel auf die Austrittsfläche der Linse fokussiert wird, da dann ein zweiter Wellenleiter, welcher das Signal aufnehmen soll, mit seiner Endfläche direkt an der Austrittsfläche der Linse positioniert werden kann. Alternativ kann allerdings der Fokuspunkt auch von der Austrittfläche beabstandet sein. Notwendig ist allerdings, dass ein konvergentes Strahlenbündel auf die Austrittsfläche der Linse projiziert wird.

Vorzugsweise ist der Durchmesser des Strahlenbündels auf der Austrittsfläche kleiner als 100µm, besonders bevorzugt kleiner als 25 µm und am besten kleiner als 10 µm.

In einer bevorzugten Anordnung entspricht der Durchmesser des Strahlenbündels auf der Austrittsfläche der Linse im Wesentlichen einer Austrittsfläche eines zweiten Lichtwellenleiters, z.B. eines Vollkernlichtwellenleiters, sodass, wenn die Fokussierung entsprechend gewählt wird, das gesamte Lichtsignal auf einen Abschnitt der Austrittsfläche fokussiert wird, dessen Ausdehnung im Wesentlichen der typischen Ausdehnung des Kerns des zweiten Lichtwellenleiters entspricht. Durch die geeignete Wahl der Linse kann das Lichtsignal auf den Kerndurchmesser des zweiten Lichtwellenleiters angepasst werden, in welchen eine Signalübertragung erfolgen soll.

Die Linsen können als Linsenarray ausgebildet sein. Vorzugsweise ist das Linsenarray einstückig ausgebildet.

Der Lichtwellenstecker kann für beide Signalübertragungsrichtungen verwendet werden. Wird nämlich an der Austrittsfläche der Linse ein Lichtsignal z.B. durch einen als Vollkernlichtwellenleiter ausgebildeten zweiten Lichtwellenleiter bereitgestellt, wird dieses durch die Linse auf die Stirnfläche des z.B. als Hohlkernlichtwellenleiter ausgebildeten ersten Lichtwellenleiter abgebildet.

Um die folgende Beschreibung der Erfindung zu vereinfachen, wird im Folgenden lediglich der Fall beschrieben, dass ein Lichtsignal von dem als Hohlkernlichtwellenleiter ausgebildeten ersten Lichtwellenleiter bereitgestellt wird und auf die Austrittsfläche der Linse fokussiert wird. Der Lichtwellenleiterstecker kann aber auch in umgekehrter Signalübertragungsrichtung verwendet werden. Auch kann anstelle des Hohlkernlichtwellenleiters ein Vollkernlichtwellenleiter, z. B. eine Monomode- oder eine Multimode-Glasfaser, als erster Lichtwellenleiter vorgesehen sein.

In einer bevorzugten Ausführungsform ist vorgesehen, dass der Lichtwellenleiterstecker ein Schutzgehäuse aufweist, wobei sowohl die Endabschnitte der ersten Lichtwellenleiter als auch jede Linse entweder in dem Schutzgehäuse angeordnet sind oder eine Öffnung des Schutzgehäuses verschließen.

Dabei können die Endabschnitte der Lichtwellenleiter durch eine oder mehrere Eingangsöffnungen in das Gehäuse geführt werden. Zumindest ein Abschnitt jeder Linse kann in eine oder mehrere Ausgangsöffnungen eingesetzt werden, so dass die Linsen die Ausgangsöffnungen fensterartig verschließen.

Der Bereich zwischen der Stirnfläche der ersten Lichtwellenleiter und der Eintrittsflächen der Linsen sollte in einer staubfreien Umgebung sein. Daher müssen die Eingangs- und Ausgangsöffnungen soweit sie von den Endabschnitten der ersten Lichtwellenleiter bzw. den Linsen nicht ausreichend verschlossen sind, noch abgedichtet werden. Dies kann beispielsweise mit Hilfe von Klebstoff erfolgen, welcher zudem die Endabschnitte der ersten Lichtwellenleiter bzw. die Linsen in den Ein- bzw. Ausgangsöffnungen fixiert. Das Schutzgehäuse ist vorzugsweise staubdicht verschlossen. Das Schutzgehäuse sollte mindestens die Schutzklasse IP5X und vorzugsweise die Schutzklasse IP6X aufweisen. Des Weiteren sollte das Schutzgehäuse auch gegenüber Feuchtigkeit abgedichtet sein, so dass es in einer bevorzugten Ausführungsform zusätzlich oder alternativ mindestens die Schutzklasse IPX1, vorzugsweise die Schutzklasse IPX3 und am besten die Schutzklasse IPX5 erfüllt.

In einer bevorzugten Ausführungsform ist vorgesehen, dass das Schutzgehäuse eine Eingangs- und eine Ausgangsfläche, zwischen denen sich ein oder mehrere Durchgangskanäle oder Nuten erstrecken, aufweist. Die Durchgangskanäle müssen nicht unbedingt vollständig von der Eingangs- zur Ausgangsfläche verlaufen, sondern können Unterbrechungen aufweisen oder abschnittsweise miteinander verbunden sein. In einer bevorzugten Ausführungsform sind N Durchgangskanäle vorgesehen, so dass jedem ersten Lichtwellenleiter ein eigenen Durchgangskanal zugeordnet ist. Alternativ können jedoch auch mehrere erste Lichtwellenleiter ein und demselben Durchgangskanal zugeordnet sein.

Zumindest ein Teil des Endabschnitts jedes Hohlkernlichtwellenleiters wird jeweils in einem der Durchgangskanäle oder in einer der Nuten gehalten. Vorzugsweise sind sowohl der Endabschnitt des Hohlkernlichtwellenleiters als auch zumindest ein Abschnitt der zugeordneten Linse in dem Durchgangskanal oder der Nut angeordnet. Dabei ist die Linse näher an der Ausgangsfläche angeordnet als der Endabschnitt des Hohlkernlichtwellenleiters.

Durch die Anordnung im Durchgangskanal wird sichergestellt, dass es zwischen der Stirnfläche des Hohlkernlichtwellenleiters und der Eintrittsfläche keinerlei äußere Einflüsse, wie z.B. durch Staub oder Feuchtigkeit, gibt. Dadurch wird die Signalstärke des Lichtsignals praktisch nicht reduziert. Es kann von Vorteil sein, wenn der Durchgangskanal versiegelt wird, d.h. sowohl der Endabschnitt des Hohlkernlichtwellenleiters als auch die Linse den Durchgangskanal von beiden Seiten abdichten. Diese Ausführungsform mit Durchgangskanal ist besonders für kleine Anzahlen N, z.B. N = 2, von ersten Lichtwellenleitern geeignet.

Es ist möglich, dass jeder Durchgangskanal zwei Abschnitte mit unterschiedlichem Querschnitt aufweist, wobei der Endabschnitt des Hohlkernlichtwellenleiters zumindest teilweise in dem Abschnitt mit kleinerem Querschnitt und die Linse in dem Abschnitt mit größerem Querschnitt angeordnet ist. Um eine wirksame Fokussierung des Lichtsignals auf die Austrittsfläche zu bewirken, muss die Linse in der Regel einen bestimmten Mindestdurchmesser aufweisen. Daher hat die Linse meist einen größeren Querschnitt als der Hohlkernlichtwellenleiter. Der Durchgangskanal kann daher in dem Bereich, in welchem der Hohlkernlichtwellenleiter geführt wird, einen kleineren Querschnitt aufweisen. Dies vereinfacht die Fixierung des Hohlkernlichtwellenleiters innerhalb des Durchgangskanals.

In einer bevorzugten Ausführungsform weist das Schutzgehäuse einen oder mehrere Anschläge auf, die dafür vorgesehen sind, an entsprechenden Anschlagsflächen der Endabschnitte der ersten Lichtwellenleiter und/oder der Linsen anzuliegen, um die Position der Endabschnitte der ersten Lichtwellenleiter und/oder der Linsen relativ zum Schutzgehäuse in Ausbreitungsrichtung und/oder in lateraler Richtung festzulegen.

Beispielsweise kann das Schutzgehäuse einen Anschlag für die Linsen oder das Linsenarray aufweisen, an welchem die Linse anliegt, so dass eine Bewegung der Linsen in Richtung des Hohlkernlichtwellenleiters verhindert wird.

Alternativ oder in Kombination hierzu kann jeder Durchgangskanal einen Anschlag für den Hohlkernlichtwellenleiter aufweisen, an welchem der Hohlkernlichtwellenleiter anliegt, so dass eine Bewegung des Hohlkernlichtwellenleiters in Richtung der Linse verhindert wird. Alternativ oder in Kombination hierzu kann der Anschlag auch derart ausgebildet sein, dass er eine laterale Bewegung zwischen Linse und/oder Hohlkernlichtwellenleiter relativ zum Schutzgehäuse im Wesentlichen und am besten vollständig verhindert.

Solche Anschläge können beispielsweise durch Durchgangskanalabschnitte mit unterschiedlichen Querschnitten verwirklicht werden. Wenn das Schutzgehäuse und insbesondere der darin eingebrachte Durchgangskanal präzise gefertigt sind, kann die Justierung von Hohlkernlichtwellenleiter und Linse allein dadurch erfolgen, dass die betreffenden Elemente am jeweiligen Anschlag positioniert werden.

In einer weiteren bevorzugten Ausführungsform ist vorgesehen, dass die Austrittsfläche der Linse den Durchgangskanal an der Ausgangsfläche verschließt und zwar am besten bündig. Durch diese Maßnahme wird zum einen sichergestellt, dass sich keine Verunreinigungen im Durchgangskanal sammeln. Zum anderen kann, ohne dass der Durchgangskanal einen störenden Einfluss hat, auf die Austrittsfläche der Linse zugegriffen werden, z.B. um diese zu reinigen.

In einer alternativen Ausführungsform ist vorgesehen, dass die Linse den Durchgangskanal an der Ausgangsfläche verschließt, wobei die Austrittsfläche über die Ausgangsfläche vorsteht. Es ist möglich, den vorstehenden Teil der Linse mit einem Klebstoff zu umhüllen, wobei die Austrittsfläche keinen Klebstoff aufweist.

In einer weiteren bevorzugten Ausführungsform ist vorgesehen, dass das Schutzgehäuse einen Querkanal aufweist, welcher den Durchgangskanal schneidet, wobei vorzugsweise der Querkanal das Schutzgehäuse vollständig durchquert. Auch wenn der Querkanal nicht unbedingt im rechten Winkel zu dem Durchgangskanal verlaufen muss, ist dies in der Regel die bevorzugte Ausführungsform. Durch den Querkanal kann von außen in den Durchgangskanal eingegriffen werden, um den Hohlkernlichtwellenleiter innerhalb des Durchgangskanals zu justieren und beispielsweise mithilfe von Klebstoff zu fixieren. Sobald Hohlkernlichtwellenleiter und Linse exakt relativ zueinander positioniert sind, kann der Hohlkernlichtwellenleiter innerhalb des Durchgangskanals fixiert, z.B. verklebt, werden. Es können auch mehrere Querkanäle, z.B. je Durchgangskanal ein eigener Querkanal, vorgesehen sein. Die Durchgangskanäle können auch Abschnitte aufweisen, in welchen mehrere oder sogar alle Durchgangskanäle miteinander verbunden sind. In diesem Fall kann der Querkanal in solch einem Abschnitt den Durchgangskanal schneiden.

In einer besonders bevorzugten Ausführungsform ist in dem Querkanal eine Justiervorrichtung zum Justieren des Endabschnittes des Hohlkernlichtwellenleiters angeordnet. Diese Justiervorrichtung kann ein Hülsenelement mit einer Querbohrung oder einer Querausnehmung aufweisen, wobei der Endabschnitt des Hohlkernlichtwellenleiters durch die Querbohrung bzw. die Querausnehmung geführt ist. Wird nun das Hülsenelement relativ zum Querkanal und damit auch relativ zum Durchgangskanal bewegt, führt dies zu einer Bewegung des Endabschnittes des Hohlkernlichtwellenleiters innerhalb des Durchgangskanals, wodurch der Endabschnitt des Hohlkernlichtwellenleiters justiert werden kann. Dafür kann der Hohlkernlichtwellenleiter mit einem Signal beaufschlagt werden und der auf die Austrittsfläche projizierte Lichtfleck beobachtet werden. Sobald dieser Lichtfleck die gewünschten Eigenschaften (Position auf der Austrittsfläche, Durchmesser des Lichtfleckes) hat, d. h. sobald der Hohlkernlichtwellenleiter die gewünschte Relativposition zur Eintrittsfläche der Linse eingenommen hat, kann der Endabschnitt innerhalb des Durchgangskanals verklebt werden.

Es ist beispielsweise möglich, dass das Hülsenelement sowie der Durchgangskanal zumindest abschnittsweise in dem Bereich, in welchem der Endabschnitt des Hohlkernlichtwellenleiters angeordnet ist, mit Klebstoff gefüllt sind. In diesem Fall verbleibt das Hülsenelement nach der Justierung im Lichtwellenleiterstecker.

Es ist auch möglich, das Hülsenelement zweiteilig aufzubauen, wobei die beiden Teile von unterschiedlichen Richtungen des Querkanals kommend den Endabschnitt des Hohlkernlichtwellenleiters zwischen sich führen. Diese Ausführungsform erleichtert die Einbringung von dem Endabschnitt des Hohlkernlichtwellenleiters und des Hülsenelementes.

In einer weiteren bevorzugten Ausführungsform ist das Schutzgehäuse mehrteilig ausgebildet, wobei zumindest ein Teil eine Mehrzahl von Rillen zur Aufnahme von jeweils einem Abschnitt der ersten Lichtwellenleiter aufweist. Dabei sind die Rillen derart angeordnet, dass beim Zusammensetzen des Schutzgehäuses die Rillen Abschnitte von Durchgangskanälen bilden.

In einer weiteren bevorzugten Ausführungsform ist vorgesehen, dass die Stirnflächen der ersten Lichtwellenleiter und die Linsen voneinander beabstandet angeordnet sind.

Dadurch werden die Abbildungseigenschaften der Linse verbessert. Insbesondere können dadurch Rückreflexionen reduziert werden. In einer bevorzugten Ausführungsform weisen die Linsen eine Antireflexbeschichtung auf. Eine Antireflexbeschichtung kann somit auf der Eintrittsfläche und/oder der Austrittsfläche angeordnet sein. Hat die Linse einen Brechungsindex $n_{Li}$ und das im Durchgangskanal angeordnete Medium, d.h. in der Regel Luft, eine Brechungsindex $n_m$, so ergibt sich der Brechungsindex $n_1$ der Antireflexschicht, die auf der Eintrittsfläche aufgebracht ist, zu $n_1 = \sqrt{n_{Li} n_M}$.

In einer weiteren bevorzugten Ausführungsform ist $N \leq 16$ und am besten $N = 8$. Es können somit mit einer Steckverbindung sehr viele Lichtwellenleiterpaare miteinander verbunden werden.

Es ist weiterhin von Vorteil, wenn eine Mehrzahl und vorzugsweise alle Linsen als Linsenarray ausgebildet sind.

Beim Übergang zwischen den Linsen und dem zweiten Wellenleiter kann es jedoch zu unerwünschten Rückreflexionen kommen, die u.a. die Signalstärke reduzieren.

Zur Reduzierung von unerwünschten Rückreflexionen kann zumindest eine Linse und vorzugsweise jede Linse als 2-Abschnitts-Linse ausgebildet sein und zumindest zwei Abschnitte, nämlich einen ersten Abschnitt, welcher durch die Eintrittsfläche begrenzt wird, und einen zweiten Abschnitt, welcher durch die Austrittsfläche begrenzt wird, aufweisen, wobei der Brechungsindex $n_1$ des ersten Abschnitts sich von dem Brechungsindex $n_2$ des zweiten Abschnittes unterscheidet.

Für besondere Anwendungsfälle können auch mehr als zwei Abschnitte vorgesehen sein. Beispielsweise kann die Linse drei Abschnitte haben, die sich jeweils in ihrem Brechungsindex unterscheiden.

Dabei können die ersten Abschnitte mehrerer und vorzugsweise aller Linsen einstückig ausgebildet sein. Alternativ oder in Kombination dazu können die zweiten Abschnitte mehrerer und vorzugsweise aller Linsen einstückig ausgebildet sein. Dies erleichtert die Herstellung der 2-Abschnitts-Linsen und die Justierung der 2-Abschnittslinsen im Lichtwellenleiterstecker erheblich.

Wenn die Linse aus mehreren Teilen besteht, können diese Teile mit einem Klebstoff miteinander verbunden sein. Die dünne Klebstoffschicht bildet dann keinen Linsenabschnitt im Sinne der vorliegenden Erfindung. In einer bevorzugten Ausführungsform ist daher vorgesehen, dass jeder Abschnitt der Linse eine Dicke von mindestens 0,2 mm und vorzugsweise von mindestens 0,3 mm aufweist, so dass das Strahlenbündel beim Durchtritt durch die Linse in jedem Abschnitt eine Wegstrecke von mindestens 0,2 mm bzw. 0,3 mm durchläuft.

Dabei ist in einer bevorzugten Ausführungsform der Brechungsindex $n_2$ des zweiten Abschnittes kleiner als der Brechungsindex $n_1$ des ersten Abschnitts, wobei vorzugsweise der Brechungsindex $n_2$ kleiner als 1,5 und besonders bevorzugt $1,5 > n_2 > 1,4$ ist. Diese Wahl der Brechungsindex hat sich als effektiv erwiesen. Der Brechungsindex $n_2$ kann vorzugsweise an den Brechungsindex einer als zweiten Lichtwellenleiter verwendeten Vollkernfaser angepasst werden.

Beispielsweise kann der erste Abschnitt aus einem anderen Material als der zweite Abschnitt hergestellt sein. Ebenfalls von Vorteil ist es, wenn der Brechungsindex $n_1$ innerhalb des ersten Abschnitts und/oder der Brechungsindex $n_2$ innerhalb des zweiten Abschnittes konstant ist, da sich dann die 2-Abschnitts-Linse leichter herstellen lässt. Dabei hat es sich gezeigt, dass besonders bevorzugt der zweite Abschnitt in der Ausbreitungsrichtung eine größere Länge als der erste Abschnitt in der Ausbreitungsrichtung aufweist.

In einer weiteren bevorzugten Ausführungsform ist die 2-Abschnitts-Linse zweiteilig ausgebildet mit einem ersten Teil, welcher den ersten Abschnitt umfasst, und einem zweiten Teil, welcher den zweiten Abschnitt aufweist. Die Teile können daher separat gefertigt und nebeneinander positioniert werden, wobei besonders bevorzugt die beiden Teile der 2-Abschnitts-Linse einander zugewandte Kontaktflächen aufweisen, an denen die beiden Teile direkt oder über eine dazwischen angeordnete Klebstoffschicht miteinander in Kontakt stehen, so dass ein aus dem der 2-Abschnitts-Linse zugeordneten ersten Lichtwellenleiter austretendes Strahlenbündel auf die Eintrittsfläche des erstem Teils trifft und über die Kontaktflächen in das zweite Teil tritt. Der zweite Teil kann beispielsweise ein Glaskörper mit parallelen oder nahezu parallelen Eingangs- und Ausgangsflächen sein. Es ist nicht notwendig, dass jedes Teil eine gekrümmte Oberfläche aufweist. Wesentlich ist lediglich, dass die Kombination der beiden Teile, d.h. die zusammengesetzte 2-Abschnitts-Linse ein konvergentes Strahlenbündel aus dem aus der Stirnfläche des ersten Lichtwellenleiters austretendes Lichtsignal erzeugt. In einer bevorzugten Ausführungsform sind die beiden Teile miteinander verklebt, so dass sich zwischen den beiden Teilen eine dünne Klebstoffschicht ausbildet. Alternativ können die beiden Teile sich auch ohne Klebstoffschicht direkt an ihren Kontaktflächen berühren.

In einer weiteren bevorzugten Ausführungsform sind die Kontaktfläche des zweiten Teils und die Austrittsfläche jeweils eben ausgebildet aber nicht parallel zueinander angeordnet. Dabei kann die Kontaktfläche des zweiten Teils senkrecht zur Ausbreitungsrichtung ausgerichtet sein. Alternativ dazu kann die Austrittsfläche des zweiten Teils auch konvex gekrümmt ausgebildet sein.

Hinsichtlich des Lichtwellenleiterverbinders wird die eingangs genannte Aufgabe durch einen Lichtwellenleiterverbinder zum optischen Verbinden einer Anzahl N von ersten Lichtwellenleitern, wobei N ≥ 2 ist, welche jeweils einen Endabschnitt aufweisen, mit einer Anzahl M von zweiten Lichtwellenleitern, wobei M ≥ 1 ist, welche jeweils einen Endabschnitt aufweisen, gelöst mit einem ersten Lichtwellenleiterstecker, in welchem die Endabschnitte der ersten Lichtwellenleiter mit einer ersten Lichtwellenleiterstirnfläche gehalten sind, und einem zweiten Lichtwellenleiterstecker, in welchem die Endabschnitte der zweiten Lichtwellenleiter mit einer zweiten Lichtwellenleiterstirnfläche gehalten sind, wobei jeder ersten Lichtwellenleiterstirnfläche genau eine zweite Lichtwellenleiterstirnfläche zugeordnet ist, wobei zwischen jeder ersten Lichtwellenleiterstirnfläche und der dieser zugeordneten zweiten Lichtwellenleiterstirnfläche zumindest eine Linse derart angeordnet ist, dass ein aus der ersten Lichtwellenleiterstirnfläche austretender Lichtstrahl auf die zweite Lichtwellenleiterstirnfläche abgebildet wird, wobei als erster Lichtwellenleiterstecker ein Lichtwellenleiterstecker der oben beschriebenen Art vorgesehen ist, wobei vorzugsweise als erster Lichtwellenleiterstecker und als zweiter Lichtwellenleiterstecker ein Lichtwellenleiterstecker der oben beschriebenen Art vorgesehen ist.

Um die folgende Beschreibung des erfindungsgemäßen Lichtwellenleiterverbinder zu vereinfachen, wird auch im Folgenden lediglich der Fall beschrieben, dass ein Lichtsignal von einem der als Hohlkernlichtwellenleiter ausgebildeten ersten Lichtwellenleiter bereitgestellt wird und auf die Austrittsfläche einer der Linsen fokussiert wird. Als zweiter Lichtwellenleiter wird in dem im Folgenden beschriebenen Fall ein Vollkernlichtwellenleiter vorgesehen. Der Lichtwellenleiterverbinder kann aber auch in umgekehrter Signalübertragungsrichtung verwendet werden. Auch kann anstelle des Hohlkernlichtwellenleiters eine Monomode- oder Multimode-Glasfaser als erster Lichtwellenleiter vorgesehen sein. Schließlich ist es auch möglich, das als erster und als zweiter Lichtwellenleiter ein Hohlkernlichtwellenleiter vorgesehen ist. In diesem Fall sind zwischen jeder ersten Lichtwellenleiterstirnfläche und der dieser zugeordneten zweiten Lichtwellenleiterstirnfläche zwei Linsen angeordnet.

Die Linse ist vorzugsweise derart angeordnet, dass sie die Vollkernstirnfläche berührt. Eine Antireflexbeschichtung kann dann auf der Austrittsfläche angeordnet sein. Hat die Linse einen Brechungsindex $n_{Li}$ und der Kern des Vollkernlichtleiters einen Brechungsindex von $n_F$, so sollte der Brechungsindex $n_2$ der Antireflexschicht, die auf der Austrittsfläche aufgebracht ist,

$$n_2 = \sqrt{n_F n_M}$$

ergeben. Werden stattdessen Hohlkernlichtwellenleiter miteinander verbunden, berühren sich vorzugsweise die Linsen des ersten und des zweiten Lichtwellensteckers.

Weiterhin kann eine Vorspannvorrichtung vorgesehen sein, welche die Austrittsfläche der Linse des ersten Lichtwellenleitersteckers gegen die Vollkernstirnfläche oder gegen die Austrittsfläche des zweiten Lichtwellenleitersteckers vorspannt.

In einer weiteren bevorzugten Ausführungsform wird als zweiter Lichtwellenleiter ein Vollkernlichtwellenleiter verwendet, dessen Kern einen Brechungsindex aufweist, welcher um nicht mehr als 10%, vorzugsweise um nicht mehr als 3% und am besten um nicht mehr als 1% von dem Brechungsindex des zweiten Abschnitts der Linse abweicht.

So können beispielsweise bereits bekannte Lichtwellenleitersteckverbindungen, wie z.B. LC-Stecker, auch für die Verbindung von Vollkernlichtwellenleitern mit Hohlkernlichtwellenleitern oder für die Verbindung von Hohlkernlichtwellenleitern miteinander oder für die Verbindung von Vollkernlichtwellenleitern mit unterschiedlichen Felddurchmessern verwendet werden, wenn der LC-Stecker wie beschrieben ausgebildet ist.

Weitere Vorteile, Merkmale und Anwendungsmöglichkeiten der vorliegenden Erfindung werden deutlich anhand der folgenden Beschreibung bevorzugter Ausführungsformen und der zugehörigen Figuren. Es zeigen:

Figur 1      eine Schnittansicht durch einen Lichtwellenleiterstecker mit Lichtwellenleiter,

Figur 2      eine Schnittansicht eines Schutzgehäuses der Ausführungsform von Figur 1,

Figur 3      eine perspektivische Ansicht der Justiereinrichtung der Ausführungsform von Figur 1,

Figur 4      eine Schnittansicht durch das Schutzgehäuse mit eingesetzter Justiereinrichtung der Ausführungsform von Figur 1,

Figur 5      eine Ansicht wie in Figur 4, jedoch mit eingesetztem Lichtwellenleiter,

Figur 6      eine Schnittansicht durch eine zweite Ausführungsform eines Lichtwellenleitersteckers,

Figur 7      eine Schnittansicht durch einen Lichtwellenleiterverbinder,

Figur 8      eine Schnittansicht durch eine dritte Ausführungsform eines Lichtwellenleitersteckers,

Figur 9      eine perspektivische Schnittansicht der dritten Ausführungsform,

Figur 10      eine Schnittansicht durch eine vierte Ausführungsform eines Lichtwellenleitersteckers,

Figur 11      eine perspektivische Schnittansicht der vierten Ausführungsform,

Figur 12      eine Schnittansicht durch eine zweite Ausführungsform eines Lichtwellenleiterverbinders,

Figur 13      eine perspektivische Ansicht einer fünften Ausführungsform eines erfindungsgemäßen Lichtwellenleitersteckers,

Figur 14      eine perspektivische Ansicht des Schutzgehäuses der fünften Ausführungsform,

Figur 15      eine Explosionsansicht des Schutzgehäuses von Figur 14,

Figur 16      eine perspektivische Ansicht auf das geöffnete Schutzgehäuse von Figur 14,

Figur 17    eine Schnittansicht des Schutzgehäuses von Figur 14 und

Figur 18    eine perspektivische Schnittansicht des Schutzgehäuses von Figur 14.

In den Figuren sind insgesamt fünf unterschiedliche erfindungsgemäßen Ausführungsformen der Erfindung gezeigt. Für die ersten vier Ausführungsformen sind jeweils Schnittansichten durch einen ersten Lichtwellenleiter gezeigt. Es versteht sich, dass weitere erste Lichtwellenleiter parallel dazu angeordnet sind und daher in den Figuren nicht dargestellt sind. Für die fünfte Ausführungsform ist die Anordnung von allen ersten Lichtwellenleitern dargestellt.

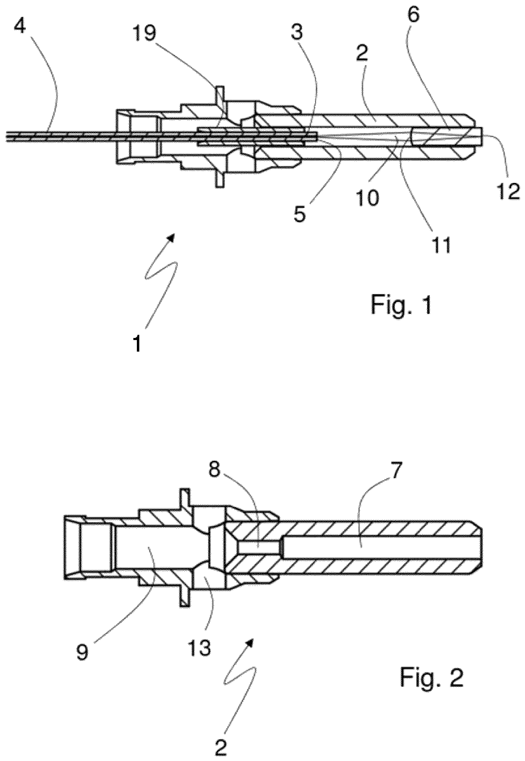

In Figur 1 ist eine Schnittansicht einer ersten bevorzugten Ausführungsform eines Lichtwellenleitersteckers 1 gezeigt.

In der dargestellten Schnittansicht des Lichtwellenleitersteckers 1 ist ein Endabschnitt 3 eines Hohlkernlichtwellenleiters 4 dargestellt. Dieser Endabschnitt 3 wird in einem Durchgangskanal 7, 8, 9 (in Figur 2 gezeigt) gehalten. Weiterhin ist eine Linse 6 vorgesehen. Aus einer Stirnfläche 5 des Endabschnittes 3 des Hohlkernlichtwellenleiters 4 tritt ein Lichtstrahl bzw. ein Strahlenbündel 10 aus, der bzw. das sich in Richtung der Linse 6 verbreitert. Die Linse 6 ist derart ausgebildet, dass sie den Lichtstrahl 10, der auf eine Eintrittsfläche 11 der Linse 6 trifft, als konvergentes Strahlenbündel auf die Austrittsfläche 12 der Linse 6 projiziert und vorzugsweise fokussiert. Im besten Fall befindet sich die Austrittsfläche 12 im Fokus des konvergenten Strahlenbündels. Eine Anordnung außerhalb des Fokus ist auch möglich, auch wenn dies nachteilig ist.

In der gezeigten Ausführungsform ist eine Kapillare 19 vorgesehen, welche einen Teil des Endabschnittes 3 des Hohlkernlichtwellenleiters 4 umgibt. Auf die Kapillare 19 kann verzichtet werden. In diesem Fall wird der Durchgangskanal vorzugsweise gestuft ausgebildet.

Auch wenn anhand der bevorzugten Ausführungsform beschrieben wird, dass ein Lichtstrahl aus der Stirnfläche 5 des Endabschnittes 3 des Hohlkernlichtwellenleiters 4 austritt und auf die Eintrittsfläche 11 Linse 6 trifft, kann der Signallauf auch umgekehrt sein. Ein über die Austrittsfläche 12 der Linse 6 eingekoppeltes Signal kann auch auf die Stirnfläche 5 des Endabschnittes 3 abgebildet werden.

Die beschriebenen Elemente des Lichtwellenleitersteckers sind in dem in Figur 2 gezeigten Schutzgehäuse 2 angeordnet. Das Schutzgehäuse 2 hat mehrere Durchgangskanäle, von denen in der Schnittansicht nur einer zu sehen ist. Dieser Durchgangskanal hat in der gezeigten Ausführungsform drei Abschnitte, nämlich einen vorderen Abschnitt 7, der dafür vorgesehen ist, die Linse 6 aufzunehmen, und einen mittleren Abschnitt 8, der dafür vorgesehen ist, den Endabschnitt 3 des Hohlkernlichtwellenleiters 4 aufzunehmen und dessen Querschnitt gegenüber dem Querschnitt des vorderen Abschnittes 7 reduziert ist. Schließlich folgt noch ein hinterer Abschnitt 9 des Durchgangskanals, welcher wieder einen etwas größeren Querschnitt aufweist. Der hintere Abschnitt 9 ist von untergeordneter Bedeutung für die Erfindung und kann jeden beliebigen Querschnitt aufweisen.

Weiterhin ist ein Querkanal 13 vorgesehen, über welchen von der Mantelfläche des Schutzgehäuses 2 Zugriff zu dem Durchgangskanal gewährt wird.

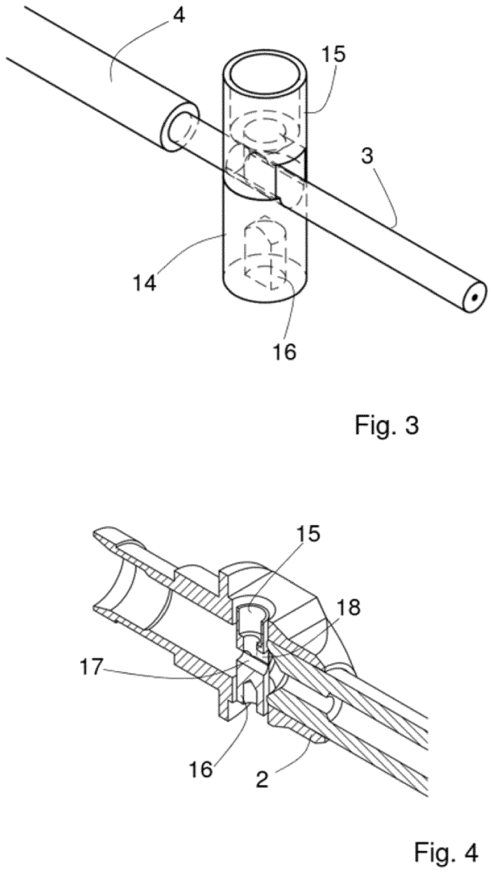

In dem Querkanal 13 ist eine Justiervorrichtung 14, 15 angeordnet, die in Figur 3 gezeigt ist. Die Justiervorrichtung 14, 15 besteht aus zwei Elementen 14 und 15, welche im zusammengesetzten Zustand, wie er in Figur 3 zu sehen ist, eine Querbohrung bzw. eine quer verlaufende Ausnehmung aufweisen, durch die der Endabschnitt 3 der Hohlkernglasfaser 4 geführt werden kann. In einer alternativen Ausführungsform kann auf das obere Element 15 der Justiervorrichtung 14,15 verzichtet werden. In dem gezeigten Beispiel hat das untere Element 14 der Justiervorrichtung eine in der Zeichnung angedeutete Handhabungsausnehmung 16, mit welcher die Justiervorrichtung 14, 15 in Richtung des Querkanals 13 bewegt und/oder um die Achse des Querkanals 13 gedreht werden kann. Das obere Element 15 kann ebenfalls eine Handhabungsausnehmung aufweisen. Dadurch kann der Endabschnitt 3 des Hohlkernlichtwellenleiters 4 relativ zum Schutzgehäuse 2 justiert werden. Sobald die Relativposition auf die gewünschte Position eingestellt ist, kann Klebstoff über die Öffnung des hülsenförmig ausgebildeten Teils 15 der Justiervorrichtung eingefüllt werden, sodass sich der Klebstoff durch die quer verlaufende Ausnehmung 18 in Richtung des Endabschnittes 3 verteilt und dort eine feste Verbindung zwischen Endabschnitt 3 und Schutzgehäuse 2 innerhalb des mittleren Abschnitts 8 des Durchgangskanals 7, 8, 9 erzeugt. Die Justiervorrichtung 14, 15 kann auch einteilig ausgebildet sein, wobei dann der Endabschnitt 3 durch die quer verlaufende Ausnehmung 18 der Justiervorrichtung 14, 15 geführt werden müsste. Die zweiteilige Ausbildung hat den Vorteil, dass die Montage des Wellenleitersteckers einfacher ist.

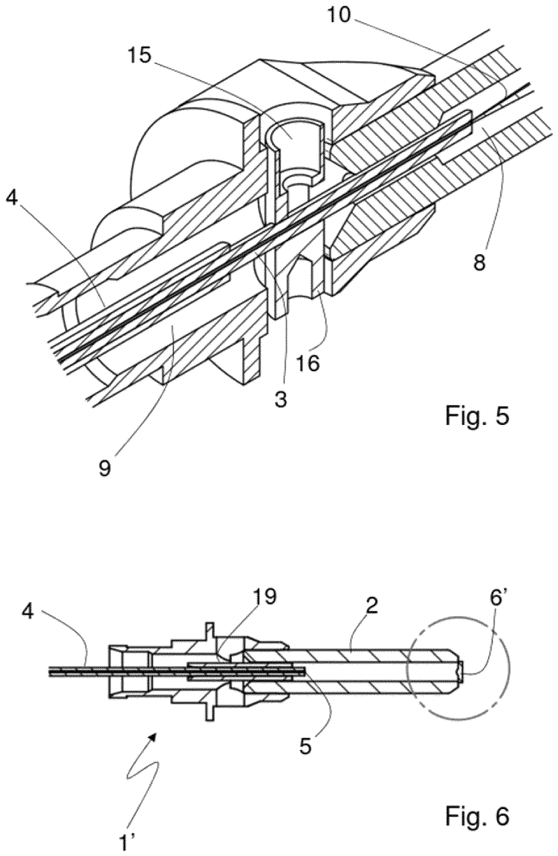

In den Figuren 4 und 5 sind zwei Teilschnittansichten des Schutzgehäuses 2 mit eingesetzter Justiervorrichtung 14, 15 einmal ohne Lichtwellenleiter (Figur 4) und einmal mit Lichtwellenleiter (Figur 5) gezeigt, um die Anordnung des Endabschnittes 3 innerhalb der Justiervorrichtung 14, 15 besser erkennen zu können. Zu erkennen ist hier, dass die Justiervorrichtung 15, 16 eine quer verlaufende Bohrung 17 aufweist, in welche der Endabschnitt 3 eingeschoben werden kann. In Richtung des mittleren Abschnitts 8 des Durchgangskanals ist die quer verlaufende Bohrung 17 mit einer Ausnehmung 18 verbunden, durch welche der Klebstoff leicht aus dem hülsenartigen Element 15 austreten kann.

Entsprechende Justiervorrichtungen sind auch in den nicht dargestellten Durchgangskanälen vorhanden, um die anderen ersten Lichtwellenleiter justieren zu können.

In Figur 6 ist eine alternative Ausführungsform eines Lichtwellenleitersteckers 1' gezeigt. Diese Ausführungsform entspricht im Wesentlichen der in Figur 1 gezeigten Ausführungsform, wobei jedoch eine alternativ ausgebildete Linse 6' vorgesehen ist. Diese Linse kann aus Quarzglas, Silizium oder SF11 hergestellt sein. Entsprechend ausgebildete Linsen sind auch in den nicht dargestellten, weiteren Durchgangskanälen vorgesehen.

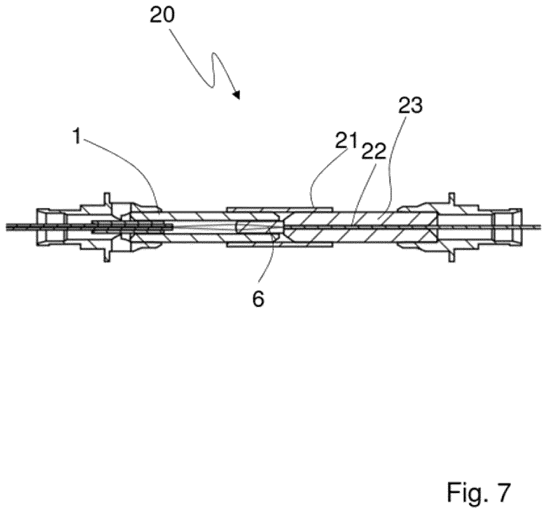

In Figur 7 ist eine Schnittansicht eines Lichtwellenleiterverbinders 20 dargestellt. Im linken Teil der Figur 7 ist der in Figur 1 gezeigte Lichtwellenleiterstecker zu sehen. Im rechten Teil der Figur 7 ist ein Vollkernlichtwellenleiter 22 innerhalb einer Ferrule 23 angeordnet, wie dies aus den LC-Steckern des Standes der Technik bekannt ist. Die Ferrule 23 und der Lichtwellenleiterstecker 1 sind mit ihren Stirnflächen innerhalb einer Hülse 21 angeordnet. Dabei wird die Stirnfläche des Vollkernlichtwellenleiters 22 auf die Austrittsfläche 12 der Linse 6 gedrückt, sodass physikalischer Kontakt besteht. Es können auch mehrere Vollkernlichtwellenleiter vorgesehen sein. Im Idealfall entspricht die Anzahl der Vollkernlichtwellenleiter 22 der Anzahl der im linken Lichtwellenleitersteckers aufgenommenen Lichtwellenleiter (N >1).

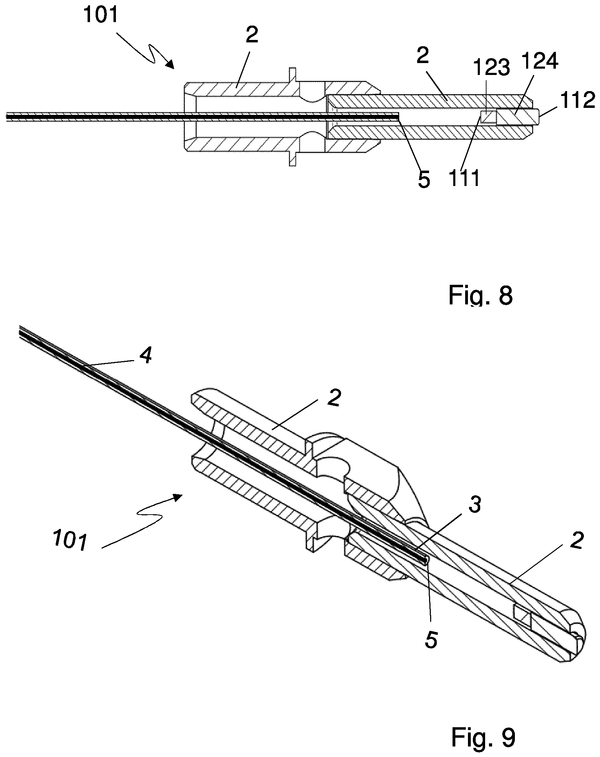

In den Figuren 8 (perspektivische Schnittansicht) und 9 (Schnittansicht) ist eine dritte Ausführungsform eines erfindungsgemäßen Lichtwellenleitersteckers 101 gezeigt. Dabei wurden identische bzw. im wesentlichen identische Bauteile mit denselben Bezugszeichen versehen wie in den vorherigen Figuren. Deutlich zu erkennen ist hier, dass die Linse 123, 124 hier aus zwei Teilen besteht, wobei der erste Teil den ersten Abschnitt 123 und der zweite Teil den zweiten Abschnitt 124 bildet. Der Brechungsindex $n_1$ im ersten Abschnitt 123 ist konstant und größer als der Brechungsindex $n_2$ im zweiten Abschnitt 124. Der zweite Abschnitt 124 hat in Ausbreitungsrichtung eine Länge die deutlich größer ist (im gezeigten Beispiel mehr als doppelt so lang) als die Länge des ersten Abschnittes 123 in Ausbreitungsrichtung ist.

Der erste Abschnitt 123 weist die Eintrittsfläche 111 auf und ist mit dem zweiten Abschnitt 124 verklebt. Der zweite Abschnitt 124 weist die Austrittsfläche 112 auf. Deutlich zu erkennen ist, dass der Durchmesser des zweiten Abschnittes 124 größer als der Durchmesser des ersten Abschnittes 123 ist. Der Durchmesser des zweiten Abschnittes 124 entspricht im Wesentlichen dem Innendurchmesser des Durchgangskanals des Schutzgehäuses 2. Dies hat den Vorteil, dass die Linse 123,124, mit den bereits miteinander verbundenen Abschnitten 123,124 in das Schutzgehäuse 2 eingeschoben werden kann und dann bereits lateral korrekt positioniert ist. Die Linsen können auch als Linsenarray ausgebildet sein. Es ist dann von Vorteil, wenn die ersten Abschnitte 123 mehrerer - und vorzugsweise aller - Linsen und/oder die zweiten Abschnitte 124 mehrerer - und vorzugsweise aller - Linsen einstückig ausgebildet sind, so dass alle Linsen zusammen positioniert werden können.

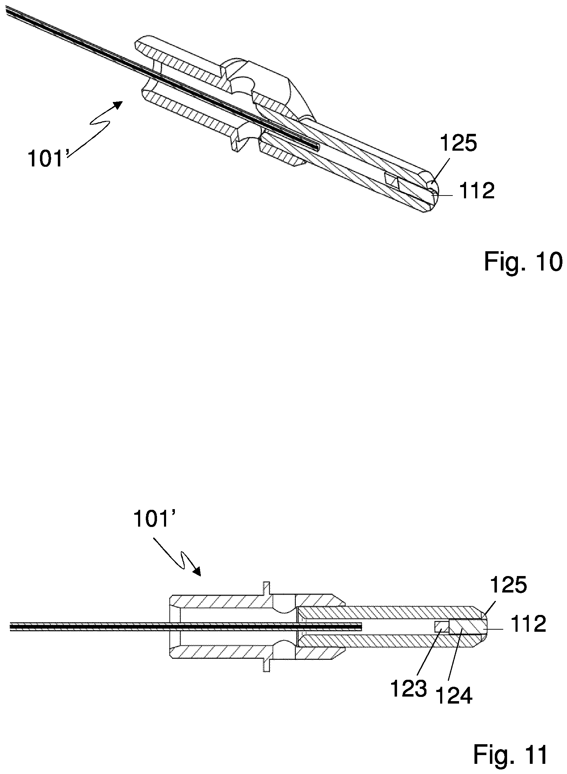

In den Figuren 10 (perspektivische Schnittansicht) und 11 (Schnittansicht) ist eine vierte Ausführungsform eines erfindungsgemäßen Lichtwellenleitersteckers 101' gezeigt. Dabei wurden identische bzw. im wesentlichen identische Bauteile mit denselben Bezugszeichen versehen wie in den vorherigen Figuren. Der einzige Unterschied zu der 3. Ausführungsform besteht darin, dass der zweite Abschnitt 124 der Linse an seinem Ende mithilfe eines Klebstoffes 125 im Durchgangskanal derart befestigt ist, dass die Austrittsfläche 112 mit dem Klebstoff 125 bündig abschließt. Dabei bleibt die Austrittsfläche 112 von dem Klebstoff 125 unbenetzt. Der Klebstoff 125 bildet somit eine Art Meniskus.

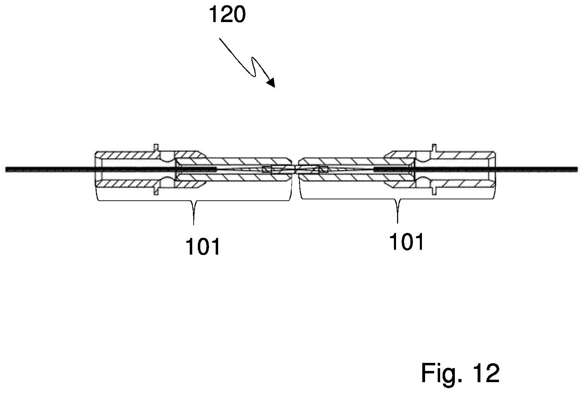

In der Figur 12 ist eine zweite Ausführungsform eines erfindungsgemäßen Lichtwellenleiterverbinders dargestellt. Die Darstellung entspricht im Wesentlichen der Darstellung von Figur 7, wobei hier jedoch nun zwei erfindungsgemäße Lichtwellenleiterstecker 101 gemäß der dritten Ausführungsform verwendet werden, um zwei Hohlkernlichtwellenleiter miteinander zu verbinden. Die weiteren Lichtwellenleiter sind parallel dazu angeordnet und daher in der Figur nicht zu sehen.

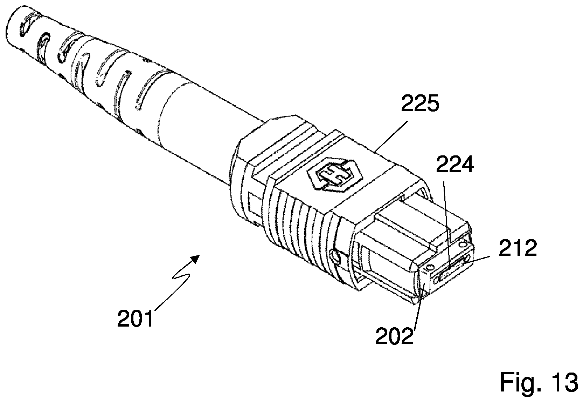

In den Figuren 13 bis 18 sind verschiedene Ansichten einer fünften Ausführungsform eines erfindungsgemäßen Lichtwellenleitersteckers 201 gezeigt.

Bei dieser Ausführungsform weist der Lichtwellenleiterstecker acht Lichtwellenleiter auf (N = 8).

In der perspektivischen Ansicht von Figur 13 ist ein Steckermantel 225 zu erkennen. Dieser Steckermantel 225 ist grundsätzlich bekannt. Zu erkennen ist das im Steckermantel 225 gehaltene Schutzgehäuses 202, der darin gehaltene zweite Abschnitt 224 der Linsen mit deren Austrittsflächen 212.

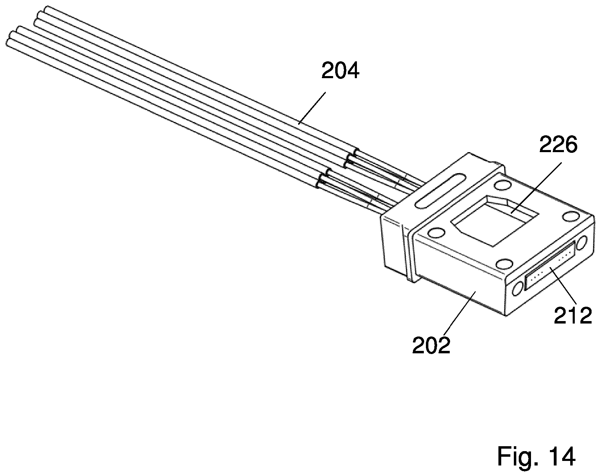

In der perspektivischen Ansicht von Figur 14 ist der Steckermantel 225 entfernt worden, sodass nun das Schutzgehäuses 202, die Austrittsfläche 212 sowie die Lichtwellenleiter 204 zu erkennen sind. Bereits in dieser Ansicht ist die Justageöffnung 226 zu sehen.

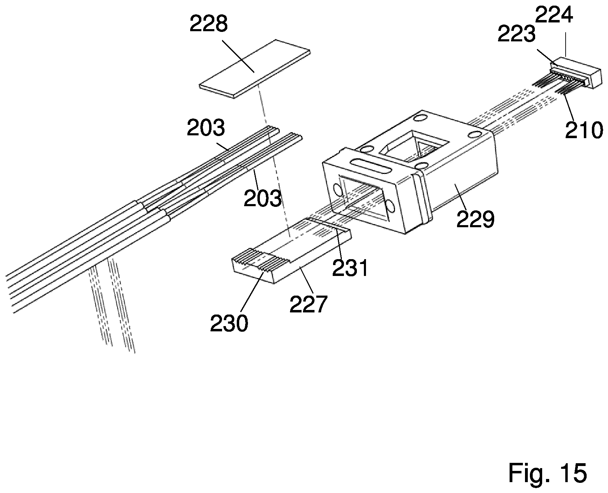

In Figur 15 ist nun eine Explosionsansicht der in Figur 14 gezeigten Teile dargestellt. Das Schutzgehäuse besteht selbst wiederum aus dem Gehäusedeckel 228, dem Grundteil 227 und dem Gehäusehauptteil 229. Das Grundteil 227 weist eine Vielzahl von als Rillen 230 ausgebildete Ausrichtsstrukturen auf, in welchen die Endabschnitte 203 der Lichtwellenleiter 204 eingelegt werden. Mithilfe der Rillen 230 können die Endabschnitte 203 bereits relativ genau positioniert werden.

Das Gehäusehauptteil 229 weist zwei gegenüberliegende Öffnungen auf, wobei die in der Figur 15 nicht zu sehende Ausgangsöffnung durch die jeweils als Array ausgebildeten ersten Abschnitte 223 und zweiten Abschnitte 224 verschlossen wird. Zu erkennen ist, dass das Grundelement 227 an seiner den Linsen zugewandten Seite gestuft ausgebildet ist, um dem Linsenarray eine Anschlagskante 231 bereitzustellen. Bei der Montage kann daher der zweite Linsenarrayabschnitt 224 einschließlich des daran befestigten, vorzugsweise geklebten, ersten Linsenarrayabschnitt 223 in die hintere Öffnung des Gehäusehauptteils 229 eingesetzt werden bis zum Kontakt mit der Anschlagskante 231.

Nachdem die Endabschnitte 203 in den entsprechenden Rillen 230 positioniert worden sind, wird der Gehäusedeckels 228 auf die Endabschnitte 203 gelegt, und bilden somit die obere und die untere Wand des Schutzgehäuses. Dieses "Sandwich" wird in die vordere Öffnung des Gehäusehauptteils 229 eingeschoben. Dabei ist das Gehäusehauptteil 229 derart ausgebildet, dass es die seitlichen Wände des Schutzgehäuses bildet. Die Endabschnitt der 203 sowie die ersten Abschnitte 223 sind daher in einem geschlossenen Raum des Schutzgehäuses angeordnet. Mit der Bezugszahl 210 ist der Strahlverlauf angedeutet.

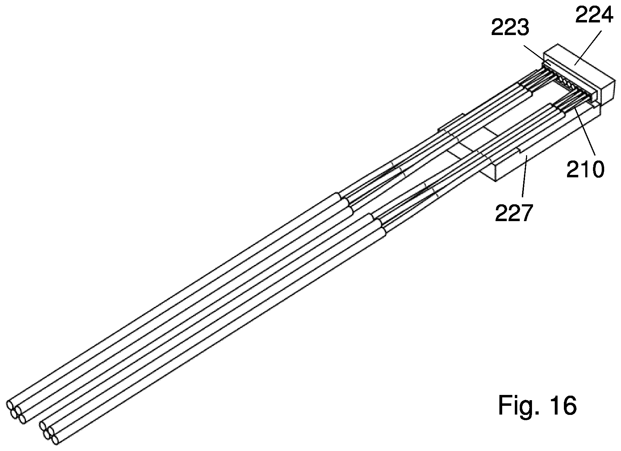

In der Figur 16 ist zur Verdeutlichung der Positionierung der einzelnen Elemente das Schutzgehäuses in einem geöffneten Zustand dargestellt.

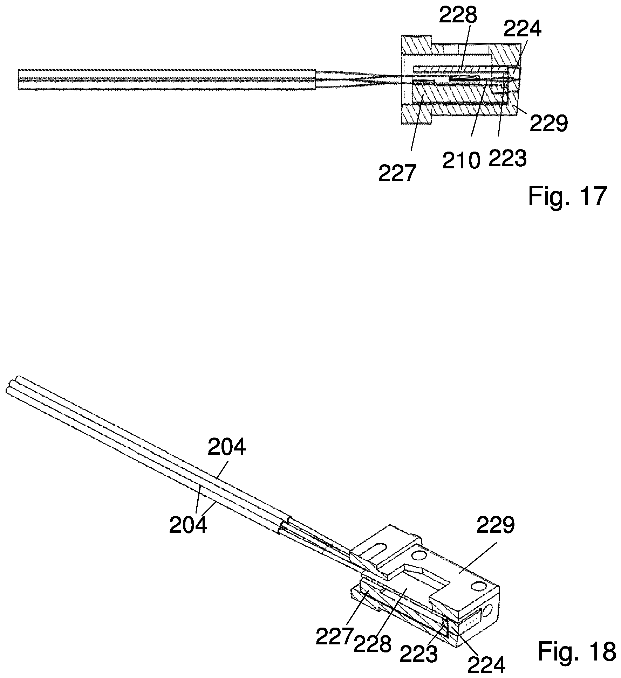

Die Figuren 17 und 18 zeigen Schnittansichten des Schutzgehäuses, aus welchem sich die Positionierung der einzelnen Elemente zueinander ergibt. Falls die Endabschnitte 203 nicht korrekt positioniert sind, kann über die Justageöffnung 226 die Position korrigiert werden. Dazu muss entweder der Gehäusedeckels 228 ebenfalls eine Öffnung aufweisen oder er muss zeitweilig entfernt werden. Beispielsweise könnten die Rillen 230 derart ausgestaltet sein, dass sie die Endabschnitte 204 etwas zu hoch positionieren. Mithilfe eines Manipulators, der beispielsweise V-Nut-förmig ausgebildet sein kann, kann dann durch die Justageöffnung 226 jeder einzelne Lichtwellenleiter soweit nach unten gedrückt werden, bis die korrekte Position eingenommen worden ist. In der Endposition wird der Endabschnitt fixiert, z.B. mithilfe von Klebstoff. Alternativ könnten die Endabschnitte 204 auch bereits auf dem Grundelement 227 relativ zueinander korrekt positioniert werden. In diesem Fall muss dann später nur das Grundelement 227 relativ zu den Linsen bzw. dem Linsenarray 223,224 ausgerichtet werden. Eine Justierung jedes einzelnen Endabschnittes 204 relativ zum Linsenarray 223, 224 kann dann entfallen.

Sind alle Endabschnitte 203 korrekt positioniert und fixiert, wird der Gehäusedeckel 228 wieder positioniert bzw. verschlossen.

### Bezugszeichenliste

| | |
|---|---|
| 1, 1', 101, 101' | Lichtwellenleiterstecker |
| 2 | Schutzgehäuse |
| 3 | Endabschnitt |
| 4 | Hohlkernlichtwellenleiter |
| 5 | Stirnfläche des Hohlkernlichtwellenleiters |
| 6, 6' | Linse |
| 7 | Durchgangskanal |
| 8 | Durchgangskanal |
| 9 | Durchgangskanal |
| 10 | Lichtstrahl |
| 11 | Eintrittsfläche |
| 12 | Austrittsfläche |
| 13 | Querkanal |
| 14 | Justiervorrichtung |
| 15 | Justiervorrichtung |
| 16 | Handhabungsausnehmung |
| 17 | Bohrung |
| 18 | Ausnehmung |
| 19 | Kapillare |
| 20, 120 | Lichtwellenleiterverbinder |
| 21 | Vollkernlichtwellenleiter |
| 22 | Ferrule |
| 123 | erster Abschnitt |
| 124 | zweiter Abschnitt |
| 125 | Klebstoff |
| 201 | Lichtwellenleiterstecker |
| 202 | Schutzgehäuse |
| 203 | Endabschnitte |
| 204 | Hohlkernlichtwellenleiter |
| 210 | Lichtstrahl |
| 211 | Eintrittsfläche |
| 212 | Austrittsfläche |
| 223 | erster Abschnitt |
| 224 | zweiter Abschnitt |
| 225 | Steckermantel |
| 226 | Justageöffnung |
| 227 | Grundelement |
| 228 | Gehäusedeckel |
| 229 | Gehäusehauptteil |
| 230 | Rille |
| 231 | Anschlagskante |

### Patentansprüche

1. Lichtwellenleiterstecker für einen Lichtwellenleiterverbinder zum optischen Verbinden einer Anzahl N von ersten Lichtwellenleitern, wobei N $\geq$ 2 ist, mit einer Anzahl M von zweiten Lichtwellenleitern, wobei M $\geq$ 1ist, wobei der Lichtwellenleiterstecker einen Endabschnitt jedes ersten Lichtwellenleiters mit einer Lichtwellenleiterstirnfläche hält und eine Anzahl N von Linsen aufweist, die jeweils eine Eintrittsfläche, die einem der ersten Lichtwellenleiter zugewandt ist, und eine Austrittsfläche, die diesem ersten Lichtwellenleiter abgewandt ist, aufweist, wobei jede Linse genau einem ersten Lichtwellenleiter und jeder Lichtwellenleiter genau einer Linse zugeordnet ist und die Linsen derart ausgebildet und angeordnet sind, dass ein aus einem der ersten Lichtwellenleiter in einer Ausbreitungsrichtung austretendes Strahlenbündel auf die Eintrittsfläche der zugeordneten Linse trifft und als konvergentes Strahlenbündel auf die Austrittsfläche der zugeordneten Linse projiziert wird.

2. Lichtwellenleiterstecker nach Anspruch 1, **dadurch**

**gekennzeichnet, dass** die Linse derart ausgebildet und angeordnet ist, dass ein aus dem ersten Lichtwellenleiter austretendes Strahlenbündel auf die Eintrittsfläche trifft und auf die Austrittsfläche fokussiert wird.

3. Lichtwellenleiterstecker nach einem der vorherigen Ansprüche, **dadurch gekennzeichnet, dass** der Lichtwellenleiterstecker ein Schutzgehäuse aufweist, wobei sowohl die Endabschnitte der ersten Lichtwellenleiter als auch jede Linse entweder in dem Schutzgehäuse angeordnet sind oder eine Öffnung des Schutzgehäuses verschließen, wobei vorzugsweise das Schutzgehäuse einen oder mehrere Anschläge aufweist, die dafür vorgesehen sind, an entsprechenden Anschlagsflächen der Endabschnitte der ersten Lichtwellenleiter und/oder der Linsen anzuliegen, um die Position der Endabschnitte der ersten Lichtwellenleiter und/oder der Linsen relativ zum Schutzgehäuse in Ausbreitungsrichtung und/oder in lateraler Richtung festzulegen.

4. Lichtwellenleiterstecker nach Anspruch 3, **dadurch gekennzeichnet, dass** das Schutzgehäuse eine Eingangs- und eine Ausgangsfläche umfasst, zwischen denen sich ein oder mehrere Durchgangskanäle erstreckt, wobei vorzugsweise N Durchgangskanäle vorgesehen sind und in jedem Durchgangskanal jeweils sowohl Endabschnitt eines der ersten Lichtwellenleiter als auch zumindest ein Abschnitt einer der Linsen angeordnet sind.

5. Lichtwellenleiterstecker nach Anspruch 4, **dadurch gekennzeichnet, dass** jede Linse vollständig in einem der Durchgangskanäle angeordnet ist, wobei vorzugsweise die Austrittsflächen der Linsen den entsprechenden Durchgangskanal an der Ausgangsfläche bündig verschließen.

6. Lichtwellenleiterstecker nach einem der Ansprüche 4 bis 5, **dadurch gekennzeichnet, dass** das Schutzgehäuse einen Querkanal aufweist, welcher einen der Durchgangskanäle schneidet, wobei vorzugsweise in dem Querkanal eine Justiervorrichtung zum Justieren des in dem entsprechenden Durchgangskanal angeordneten Endabschnittes des ersten Lichtwellenleiters angeordnet ist, wobei besonders bevorzugt die Justiervorrichtung ein Hülsenelement mit einer Querbohrung oder eine Querausnehmung aufweist, wobei der Endabschnitt des ersten Lichtwellenleiters durch die Querbohrung oder die Querausnehmung geführt ist, wobei am besten das Hülsenelement sowie der Durchgangskanal zumindest abschnittsweise in dem Bereich, in welchem der Endabschnitt des entsprechenden ersten Lichtwellenleiters angeordnet ist, mit Klebstoff gefüllt ist.

7. Lichtwellenleiterstecker nach einem der Ansprüche 3 bis 6, **dadurch gekennzeichnet, dass** das Schutzgehäuse mehrteilig ausgebildet ist, wobei zumindest ein Teil eine Mehrzahl von Rillen zur Aufnahme von jeweils einem Abschnitt der ersten Lichtwellenleiter aufweist, wobei vorzugsweise das Schutzgehäuse mindestens die Schutzklasse IP5X und besonders bevorzugt die Schutzklasse IP6X erfüllt.

8. Lichtwellenleiterstecker nach einem der vorherigen Ansprüche, **dadurch gekennzeichnet, dass** die Stirnfläche des ersten Lichtwellenleiters und die zugeordnete Linse voneinander beabstandet angeordnet sind.

9. Lichtwellenleiterstecker nach einem der vorherigen Ansprüche, **dadurch gekennzeichnet, dass** $N \leq 16$ und am besten $N = 8$ ist.

10. Lichtwellenleiterstecker nach einem der vorherigen Ansprüche, **dadurch gekennzeichnet, dass** eine Mehrzahl und vorzugsweise alle Linsen als Linsenarray ausgebildet sind.

11. Lichtwellenleiterstecker nach einem der vorherigen Ansprüche, **dadurch gekennzeichnet, dass** zumindest eine Linse und vorzugsweise jede Linse als 2-Abschnitts-Linse ausgebildet ist und zumindest zwei Abschnitte, nämlich einen ersten Abschnitt, welcher durch die Eintrittsfläche begrenzt wird, und einen zweiten Abschnitt, welcher durch die Austrittsfläche begrenzt wird, aufweist, wobei der Brechungsindex $n_1$ des ersten Abschnitts sich von dem Brechungsindex $n_2$ des zweiten Abschnittes unterscheidet.

12. Lichtwellenleiterstecker nach Anspruch 11, **dadurch gekennzeichnet, dass** der Brechungsindex $n_2$ des zweiten Abschnittes kleiner als der Brechungsindex $n_1$ des ersten Abschnitts ist, wobei vorzugsweise der Brechungsindex $n_2$ kleiner als 1,5 und besonders bevorzugt $1,5 > n_2 > 1,4$ ist.

13. Lichtwellenleiterstecker nach Anspruch 11 oder 12, **dadurch gekennzeichnet, dass** der erste Abschnitt aus einem anderen Material als der zweite Abschnitt hergestellt ist, wobei vorzugsweise der Brechungsindex $n_1$ innerhalb des ersten Abschnitts und/oder der Brechungsindex $n_2$ innerhalb des zweiten Abschnittes konstant ist, wobei besonders bevorzugt der zweite Abschnitt in der Ausbreitungsrichtung eine größere Länge als der erste Abschnitt in der Ausbreitungsrichtung aufweist.

14. Lichtwellenleiterstecker nach einem der Ansprüche 11 bis 13, **dadurch gekennzeichnet, dass** die 2-Abschnitts-Linse zweiteilig ausgebildet ist mit einem ersten Teil, welcher den ersten Abschnitt umfasst, und einem zweiten Teil, welcher den zweiten Abschnitt aufweist, wobei besonders bevorzugt die beiden Teile der 2-Abschnitts-Linse einander zugewandte Kontaktflächen aufweisen, an denen die beiden Teile direkt oder über eine dazwischen angeordnete Klebstoffschicht miteinander in Kontakt stehen, so dass ein aus dem der 2-Abschnitts-Linse zugeordneten ersten Lichtwellenleiter austretendes Strahlenbündel auf die Eintrittsfläche des erstem Teils trifft und über die Kontaktflächen in das zweite Teil tritt.

15. Lichtwellenleiterstecker nach Anspruch 14, **dadurch gekennzeichnet, dass** die Kontaktfläche des zweiten Teils und die Austrittsfläche jeweils eben ausgebildet aber nicht parallel zueinander angeordnet sind.

16. Lichtwellenleiterverbinder zum optischen Verbinden einer Anzahl N von ersten Lichtwellenleitern, wobei $N \geq 2$ ist, welche jeweils einen Endabschnitt aufweisen, mit einer Anzahl M von zweiten Lichtwellenleitern, wobei $M \geq 1$ ist, welche jeweils einen Endabschnitt aufweisen, mit einem ersten Lichtwellenleiterstecker, in welchem die Endabschnitte der ersten Lichtwellenleiter mit einer ersten Lichtwellenleiterstirnfläche gehalten sind, und einem zweiten Lichtwellenleiterstecker, in welchem die Endabschnitte der zweiten Lichtwellenleiter mit einer zweiten Lichtwellenleiterstirnfläche gehalten sind, wobei jeder ersten Lichtwellenleiterstirnfläche genau eine zweite Lichtwellenleiterstirnfläche zugeordnet ist, wobei zwischen jeder ersten Lichtwellenleiterstirnfläche und der dieser zugeordneten zweiten Lichtwellenleiterstirnfläche zumindest eine Linse derart angeordnet ist, dass ein aus der ersten Lichtwellenleiterstirnfläche austretender Lichtstrahl auf die zweite Lichtwellenleiterstirnfläche abgebildet wird, wobei als erster Lichtwellenleiterstecker ein Lichtwellenleiterstecker nach einem der Ansprüche 1 bis 15 vorgesehen ist, wobei vorzugsweise als erster Lichtwellenleiterstecker und als zweiter Lichtwellenleiterstecker ein Lichtwellenleiterstecker nach einem der Ansprüche 1 bis 15 vorgesehen ist.

17. Lichtwellenleiterverbinder nach Anspruch 16, **dadurch gekennzeichnet, dass** die Linse derart angeordnet ist, dass sie die zweite Lichtwellenleiterstirnfläche berührt, wobei vorzugsweise eine Vorspannvorrichtung vorgesehen ist, welche die Ausgangsfläche der Linse gegen die zweite Lichtwellenleiterstirnfläche vorspannt.

Fig. 1

Fig. 2

4

15

3

14

16

Fig. 3

15

18

17

16

2

Fig. 4

10

15

4

8

16

3

Fig. 5

9

19

4

2

6'

5

1'

Fig. 6

Fig. 7

Fig. 8

Fig. 9

Fig. 10

Fig. 11

120

101          101

Fig. 12

Fig. 13

Fig. 14

Fig. 15

Fig. 16

Fig. 17

Fig. 18

Europäisches Patentamt
European Patent Office
Office européen des brevets

## EUROPÄISCHER RECHERCHENBERICHT

**Nummer der Anmeldung**

EP 24 18 6091

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 119 362 A (HOLZMAN MELVYN A) 10. Oktober 1978 (1978-10-10)  * Abbildungen 8-10 *  * Sp. 9, Z. 38-59 *  - - - - - | 1-5, 7-14,16, 17 | INV. G02B6/32 G02B6/38 |
| X | US 2016/077284 A1 (ARAO HAJIME [JP] ET AL) 17. März 2016 (2016-03-17)  * Abbildungen 1, 2, 6A, 12, 19A *  - - - - - | 1-17 | |
| A | US 2004/028329 A1 (REED WILLIAM ALFRED [US] ET AL) 12. Februar 2004 (2004-02-12)  * Abbildungen 4A, 4B, 6B *  * Absatz [0062] *  - - - - - | 1-17 | |
| A | US 2019/121026 A1 (FUKUDA TOSHIAKI [JP] ET AL) 25. April 2019 (2019-04-25)  * Abbildung 4 *  * Absatz [0033] *  - - - - - | 1-17 | |
| A | US 2011/182082 A1 (IDE MASAFUMI [JP] ET AL) 28. Juli 2011 (2011-07-28)  * Abbildung 7 *  * Absatz [0056] *  - - - - - | 1-17 | RECHERCHIERTE SACHGEBIETE (IPC)  G02B |
| A | US 2004/062478 A1 (LUDINGTON PAUL D [US] ET AL) 1. April 2004 (2004-04-01)  * Abbildung 18 *  - - - - - | 1-17 | |
| A | KR 2015 0099474 A (BEAM TECH CO LTD X [KR]) 31. August 2015 (2015-08-31)  * Abbildungen 1-3, 6, 7 *  - - - - - | 1-17 | |
| A | JP 2008 020560 A (TOYO GLASS CO LTD) 31. Januar 2008 (2008-01-31)  * Abbildungen 1, 5 *  - - - - - | 1-17 | |

-/--

Der vorliegende Recherchenbericht wurde für alle Patentansprüche erstellt

| Recherchenort | Abschlußdatum der Recherche | Prüfer |
|---|---|---|
| Den Haag | 18. November 2024 | Dregely, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

Europäisches Patentamt
European Patent Office
Office européen des brevets

## EUROPÄISCHER RECHERCHENBERICHT

**Nummer der Anmeldung**

EP 24 18 6091

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 115 335 744 A (NITTO DENKO CORP) 11. November 2022 (2022-11-11) * Abbildungen 1-5 * | 1-17 | |
| A | US 2022/252810 A1 (FILER MARK MCKAY [US] ET AL) 11. August 2022 (2022-08-11) * Abbildungen 1A-E, 3A-E, 7A-B * | 1-17 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. November 2024 | Dregely, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 6091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2024

| Im Recherchenbericht angeführtes Patentdokument | Datum der Veröffentlichung | Mitglied(er) der Patentfamilie | Datum der Veröffentlichung |
|---|---|---|---|
| US 4119362 A | 10-10-1978 | FR 2336694 A1<br>GB 1504490 A<br>US 4119362 A | 22-07-1977<br>22-03-1978<br>10-10-1978 |
| US 2016077284 A1 | 17-03-2016 | CN 105425341 A<br>EP 2998770 A1<br>JP 6379898 B2<br>JP 2016057540 A<br>TW 201616160 A<br>US 2016077284 A1 | 23-03-2016<br>23-03-2016<br>29-08-2018<br>21-04-2016<br>01-05-2016<br>17-03-2016 |
| US 2004028329 A1 | 12-02-2004 | US 2002150333 A1<br>US 2004028329 A1 | 17-10-2002<br>12-02-2004 |
| US 2019121026 A1 | 25-04-2019 | CN 109073822 A<br>EP 3441805 A1<br>JP 6878770 B2<br>JP 2017187613 A<br>KR 20180110041 A<br>US 2019121026 A1<br>WO 2017175493 A1 | 21-12-2018<br>13-02-2019<br>02-06-2021<br>12-10-2017<br>08-10-2018<br>25-04-2019<br>12-10-2017 |
| US 2011182082 A1 | 28-07-2011 | JP 5730026 B2<br>JP 2011175245 A<br>US 2011182082 A1 | 03-06-2015<br>08-09-2011<br>28-07-2011 |
| US 2004062478 A1 | 01-04-2004 | CN 1497281 A<br>EP 1406100 A2<br>JP 2004126586 A<br>KR 20040030338 A<br>TW 200411241 A<br>US 2004062478 A1 | 19-05-2004<br>07-04-2004<br>22-04-2004<br>09-04-2004<br>01-07-2004<br>01-04-2004 |
| KR 20150099474 A | 31-08-2015 | KEINE | |
| JP 2008020560 A | 31-01-2008 | KEINE | |
| CN 115335744 A | 11-11-2022 | CN 115335744 A<br>JP WO2021193906 A1<br>TW 202144825 A<br>US 2023089044 A1<br>WO 2021193906 A1 | 11-11-2022<br>30-09-2021<br>01-12-2021<br>23-03-2023<br>30-09-2021 |
| US 2022252810 A1 | 11-08-2022 | CN 116917785 A<br>TW 202234104 A<br>US 2022252810 A1 | 20-10-2023<br>01-09-2022<br>11-08-2022 |

EPO FORM P0461

Für nähere Einzelheiten zu diesem Anhang : siehe Amtsblatt des Europäischen Patentamts, Nr.12/82

Seite 1 von 2

## ANHANG ZUM EUROPÄISCHEN RECHERCHENBERICHT
## ÜBER DIE EUROPÄISCHE PATENTANMELDUNG NR.

EP 24 18 6091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2024

| Im Recherchenbericht angeführtes Patentdokument | Datum der Veröffentlichung | Mitglied(er) der Patentfamilie | Datum der Veröffentlichung |
|---|---|---|---|
| | | WO 2022169601 A1 | 11-08-2022 |

Für nähere Einzelheiten zu diesem Anhang : siehe Amtsblatt des Europäischen Patentamts, Nr.12/82

EPO FORM P0461

Seite 2 von 2